(19) Europäisches Patentamt / European Patent Office / Office européen des brevets

(11) **EP 3 852 390 B1**

(12) **FASCICULE DE BREVET EUROPEEN**

(45) Date de publication et mention de la délivrance du brevet:
**02.08.2023 Bulletin 2023/31**

(21) Numéro de dépôt: **21150129.1**

(22) Date de dépôt: **04.01.2021**

(51) Classification Internationale des Brevets (IPC):
***H04R 3/00*** *(2006.01)*

(52) Classification Coopérative des Brevets (CPC):
**G06F 3/167; G06F 3/165; H04R 3/00;** H04R 3/005

(54) **BOUTON VIRTUEL UTILISANT UN SIGNAL SONORE**

VIRTUELLE TASTE, DIE EIN TONSIGNAL BENUTZT

VIRTUAL BUTTON USING A SOUND SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.01.2020 FR 2000518**

(43) Date de publication de la demande:
**21.07.2021 Bulletin 2021/29**

(73) Titulaire: **SAGEMCOM BROADBAND SAS**
**92500 Rueil-Malmaison (FR)**

(72) Inventeurs:
• **NEDELCU, Radu**
  **92500 RUEIL MALMAISON (FR)**
• **BERGER, Jérôme**
  **92500 RUEIL MALMAISON (FR)**

(74) Mandataire: **Lavaud, Thomas**
  **Cabinet Boettcher**
  **5, rue de Vienne**
  **75008 Paris (FR)**

(56) Documents cités:
**US-A1- 2009 046 868     US-A1- 2010 315 211**
**US-A1- 2011 136 479     US-A1- 2012 106 754**
**US-B1- 10 157 628**

**Description**

L'invention concerne le domaine des équipements électriques comprenant un microphone et un haut-parleur.

ARRIERE PLAN DE L'INVENTION

Certains équipements électriques, comme par exemple une enceinte connectée remplissant la fonction d'assistant vocal, sont conçus pour interagir avec un utilisateur par la voix.

Un tel équipement électrique comporte au moins un microphone qui lui permet d'acquérir des requêtes émises oralement par l'utilisateur, et un haut-parleur qui lui permet de répondre oralement à l'utilisateur.

Un tel équipement électrique comporte aussi généralement un ou des boutons permettant un accès rapide à certaines fonctionnalités : démarrage d'une interaction vocale avec l'utilisateur, activation ou désactivation d'un mode de veille, marche/arrêt, réglage du volume, appairage Bluetooth, etc.

Le document US 2009/046868 A1 divulgue un casque audio sur lequel est positionné un microphone dans un trou formé dans le boîtier. Le microphone détecte que le doigt d'un utilisateur recouvre le trou en mesurant une période de silence.

Le document US 2012/106754 A1 divulgue un système permettant de localiser un doigt par écholocation.

OBJET DE L'INVENTION

L'invention a pour objet de réduire le coût d'un équipement électrique tel que précédemment décrit.

RESUME DE L'INVENTION

En vue de la réalisation de ce but, on propose un équipement électrique comprenant :

- un boîtier sur lequel est formé un trou ;
- un microphone positionné à l'intérieur du boîtier et à proximité du trou ;
- un haut-parleur ;
- des moyens d'émission agencés pour émettre via le haut-parleur un signal sonore de détection émis, le signal sonore de détection émis étant un signal comprenant une fréquence inaudible par un être humain ;
- des moyens de traitement agencés pour acquérir via le microphone un signal sonore de détection reçu, le signal sonore de détection reçu résultant d'une propagation par l'extérieur du boîtier du signal sonore de détection émis, pour détecter en temps réel à partir du signal sonore de détection reçu si un doigt d'un utilisateur est positionné ou non sur ou à proximité immédiate du trou, et pour commander la mise en oeuvre d'une action prédéterminée si le doigt est positionné sur ou à proximité immédiate du trou.

On équipe ainsi l'équipement électrique selon l'invention d'un « bouton virtuel » qui permet de commander la mise en oeuvre d'une action prédéterminée, qui est par exemple l'activation d'une interaction vocale avec un utilisateur ou bien l'activation ou la désactivation d'un mode de veille.

Lorsque l'équipement électrique est équipé d'un microphone et d'un haut-parleur qui sont utilisés pour une autre fonction, comme c'est le cas pour une enceinte connectée qui met en oeuvre une fonction d'assistant vocal, la mise en oeuvre du bouton virtuel est très peu onéreuse puisque le bouton virtuel peut utiliser le microphone et le haut-parleur « préexistants ». On remplace donc un bouton physique par un simple trou formé dans le boîtier pour réaliser ce bouton virtuel, ce qui permet de réduire le coût de fabrication de l'équipement électrique.

On note que la mise en oeuvre du bouton virtuel ne nécessite qu'un seul microphone. De plus, comme la commande nécessite uniquement de poser ou d'approcher le doigt du trou, il n'est pas nécessaire de taper sur le boîtier. Ainsi, la détection réalisée ne dépend ni des caractéristiques du doigts (et notamment de la longueur de l'ongle du doigt) ni d'une force avec laquelle le doigt tape le boîtier.

Par ailleurs, la détection ne nécessite pas un niveau de bruit ambiant particulier, et fonctionne donc même si l'environnement est complètement silencieux.

On propose aussi un équipement électrique tel que celui qui vient d'être décrit, dans lequel le microphone est un composant monté en surface qui est monté sur un circuit imprimé d'une carte électrique positionnée à l'intérieur du boîtier parallèlement à une face du boîtier sur laquelle est formée le trou.

On propose de plus un équipement électrique tel que celui qui vient d'être décrit, dans lequel un matériau isolant phonique est placé autour du microphone entre le boîtier et la carte électrique.

On propose aussi un équipement électrique tel que celui qui vient d'être décrit, dans lequel un diagramme de directivité du haut-parleur est orienté vers une zone ne comprenant pas le microphone.

On propose aussi un équipement électrique tel que celui qui vient d'être décrit, dans lequel le microphone est positionné dans une partie supérieure de l'équipement électrique et dans lequel le diagramme de directivité du haut-parleur est orienté vers le bas.

On propose en outre un équipement électrique tel que celui qui vient d'être décrit, dans lequel le microphone est positionné dans une partie supérieure de l'équipement électrique et dans lequel le diagramme de directivité du haut-parleur est orienté horizontalement.

On propose aussi un équipement électrique tel que celui qui vient d'être décrit, dans lequel le signal sonore de détection émis comprend une première succession de premiers signaux d'amplitude non nulle et de premiers signaux d'amplitude nulle.

On propose de plus un équipement électrique tel que celui qui vient d'être décrit, dans lequel les moyens de traitement sont agencés pour mettre en oeuvre un filtre passe-bande autour d'une fréquence du signal sonore de détection émis.

On propose aussi un équipement électrique tel que celui qui vient d'être décrit, dans lequel les moyens de traitement sont agencés pour évaluer au temps $t$ une puissance instantanée présente $P(t)$ du signal sonore de détection reçu, pour comparer la puissance instantanée présente $P(t)$ avec une puissance instantanée passée $P(t-T0)$, $T0$ étant compris entre 1ms et 500ms, et, si un rapport entre la puissance instantanée présente et la puissance instantanée passée est inférieur à un seuil de puissance prédéterminé, en déduire que le doigt est positionné sur ou à proximité immédiate du trou.

On propose aussi un équipement électrique tel que celui qui vient d'être décrit, dans lequel les moyens d'émission sont agencés pour émettre un signal sonore de test émis comprenant une deuxième succession de deuxièmes signaux d'amplitude non nulle et de deuxièmes signaux d'amplitude nulle, dans lequel les moyens de traitement sont agencés pour acquérir un signal sonore de test reçu, et dans lequel les moyens de traitement sont agencés pour évaluer une différence d'énergie du signal sonore de test reçu sur des intervalles du signal sonore de test reçu correspondant aux deuxièmes signaux d'amplitude non nulle et sur des intervalles du signal sonore de test reçu correspondant aux deuxièmes signaux d'amplitude nulle, pour définir un volume cible du signal sonore de test émis tel que la différence d'énergie soit supérieure à un seuil d'énergie prédéterminé, et pour émettre avec le volume cible le signal sonore de détection émis.

On propose de plus un équipement électrique tel que celui qui vient d'être décrit, dans lequel l'équipement électrique comprend une pluralité de microphones positionnés chacun à proximité d'un trou distinct formé dans le boîtier.

On propose aussi un équipement électrique tel que celui qui vient d'être décrit, dans lequel les moyens de traitement sont agencés pour ne pas commander la mise en oeuvre de l'action prédéterminée si les moyens de traitement détectent qu'un ou des objets sont positionnés simultanément sur où à proximité immédiate de plusieurs trous.

On propose aussi un équipement électrique tel que celui qui vient d'être décrit, dans lequel une action prédéterminée distincte est associée à chaque microphone et dans lequel, lorsque les moyens de traitement détectent qu'un doigt est positionné sur ou à proximité immédiate d'un trou particulier, les moyens de traitement sont agencés pour réaliser l'action prédéterminée associée au microphone situé à proximité dudit trou particulier.

On propose aussi un équipement électrique tel que celui qui vient d'être décrit, dans lequel l'action prédéterminée est une activation ou une désactivation d'une interaction vocale avec un utilisateur.

On propose aussi un équipement électrique tel que celui qui vient d'être décrit, dans lequel l'action prédéterminée est une activation ou une désactivation d'un mode de veille.

On propose aussi un équipement électrique tel que celui qui vient d'être décrit, l'équipement électrique étant une enceinte connectée qui met en oeuvre une fonction d'assistant vocal.

On propose en outre un procédé de commande d'un équipement électrique tel que celui qui vient d'être décrit, comprenant les étapes de :

- émettre via le haut-parleur un signal sonore de détection émis, le signal sonore de détection émis étant un signal comprenant une fréquence inaudible par un être humain ;
- recevoir via le microphone un signal sonore de détection reçu , le signal sonore de détection reçu résultant d'une propagation par l'extérieur du boîtier du signal sonore de détection émis ;
- détecter en temps réel à partir du signal sonore de détection reçu si un doigt d'un utilisateur est positionné ou non sur ou à proximité immédiate du trou, et réaliser une action prédéterminée si le doigt est positionné sur ou à proximité immédiate du trou.

On propose aussi un programme d'ordinateur comprenant des instructions qui conduisent l'équipement précédemment décrit à exécuter les étapes du procédé de commande qui vient d'être décrit.

On propose de plus un support d'enregistrement lisible par ordinateur, sur lequel est enregistré le programme d'ordinateur qui vient d'être décrit.

L'invention sera mieux comprise à la lumière de la description qui suit d'un mode de mise en oeuvre particulier non limitatif de l'invention.

BREVE DESCRIPTION DES DESSINS

Il sera fait référence aux dessins annexés, parmi lesquels :

[Fig. 1] la figure 1 est une vue en coupe selon un plan vertical d'un équipement électrique selon l'invention ;
[Fig. 2] la figure 2 est une vue de détail de la figure 1 ;
[Fig. 3] la figure 3 représente des étapes d'un procédé de traitement d'un signal sonore de détection reçu.

DESCRIPTION DETAILLEE DE L'INVENTION

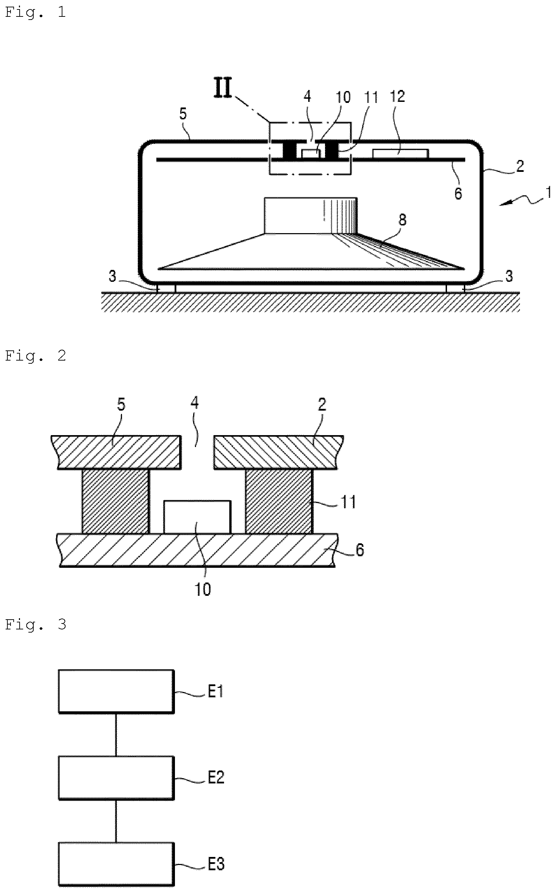

En référence aux figures 1 et 2, l'équipement électrique selon l'invention est ici une enceinte connectée 1 qui met en oeuvre une fonction d'assistant vocal.

L'enceinte connectée 1 comprend tout d'abord un boîtier 2. Par « boîtier », on entend ici l'enveloppe physique à l'intérieur de laquelle sont intégrés les composants fonctionnels de l'enceinte connectée 1 qui vont être décrits. Le boîtier 2 peut comporter plusieurs parties et éventuellement un ou des capots possiblement amovibles. Le boîtier 2 peut comprendre une ou des parties rigides, flexibles, en métal, en plastique, en tissu, en mousse, etc.

Le boîtier 2 comporte de plus des pieds 3 qui reposent sur un support quelconque (par exemple une table ou un meuble quelconque) lorsque l'enceinte connectée 1 se trouve dans sa position de fonctionnement nominal, comme c'est le cas sur la figure 1.

Un trou 4 est formé sur une face supérieure 5 du boîtier 2. Le trou 4 traverse le boîtier 2. Le trou 4 peut être formé dans une partie quelconque du boîtier 2 (et éventuellement dans un capot).

L'enceinte connectée 1 comporte aussi un châssis interne (non représenté sur les figures) intégré à l'intérieur du boîtier 2.

L'enceinte connectée 1 comporte de plus une carte électrique 6. La carte électrique 6 est intégrée dans le boîtier 2 en étant fixée au châssis interne. La carte électrique 6 est positionnée parallèlement à la face supérieure 5 du boîtier 2 et à proximité de celle-ci. La distance entre la carte électrique 6 et la face supérieure 5 du boîtier 2 est par exemple comprise entre 5mm et 1,5cm.

L'enceinte connectée 1 comprend de plus un haut-parleur 8 intégré dans le boîtier 2 en étant fixé au châssis interne. Ici, le haut-parleur 8 « pointe vers le bas », c'est-à-dire qu'il présente un diagramme de directivité qui, lorsque l'enceinte connectée 1 se trouve dans la position de fonctionnement nominal, est orienté vers le bas.

L'enceinte connectée 1 comprend de plus un microphone 10 positionné à l'intérieur du boîtier et à proximité du trou. Le microphone 10 est ici un composant monté en surface qui est monté sur un circuit imprimé de la carte électrique 6. Le microphone 10 est positionné en regard du trou 4. Ici, l'axe du trou 4 passe par le centre du microphone 10.

On note que le diagramme de directivité du haut-parleur 8 est orienté vers une zone ne comprenant pas le microphone 10 : le microphone 10 est en effet positionné dans une partie supérieure de l'enceinte connectée 1 et le diagramme de directivité du haut-parleur 8 est orienté vers le bas (lorsque l'enceinte connectée 1 se trouve dans la position de fonctionnement nominal).

Un matériau isolant phonique est placé autour du microphone 10 entre la carte électrique 6 et le boîtier 2. Le matériau isolant phonique est ici une mousse 11. La mousse 11 permet de limiter les perturbations sonores perçues par le microphone 10 et provenant de l'intérieur de l'enceinte connectée 1. Ces perturbations sonores comprennent par exemple les résonnances parasites à l'intérieur de l'enceinte connectée 1.

De même, la carte électrique 6 est fixée au châssis interne de l'enceinte connectée 1 via une pièce de fixation (non représentée) comprenant un matériau souple. La pièce de fixation est par exemple un « silentbloc », qui est une pièce comprenant par exemple du caoutchouc naturel ou un élastomère, et qui permet d'absorber les vibrations et les bruits.

La pièce de fixation permet de limiter la transmission directe de vibrations depuis le haut-parleur 8 vers le microphone 10 au travers du châssis interne.

L'enceinte connectée 1 comprend de plus des moyens d'émission et des moyens de traitement.

Les moyens d'émission comprennent des composants électroniques comportant par exemple un amplificateur.

Les moyens de traitement comprennent un composant de traitement 12 adapté à exécuter des instructions d'un programme pour mettre en oeuvre les étapes du procédé de commande qui vont être décrites ci-après. Le composant de traitement 12 est par exemple un processeur « généraliste », un processeur spécialisé dans le traitement du signal (ou DSP, pour *Digital Signal Processor),* un microcontrôleur, ou bien un circuit logique programmable tel qu'un FPGA (pour *Field Programmable Gate Arrays*) ou un ASIC (pour *Application Specific Integrated Circuit). * Le composant de traitement 12 est monté sur la carte électrique 6.

On décrit maintenant la mise en oeuvre du bouton virtuel sur l'enceinte connectée 1 grâce aux moyens qui viennent d'être décrits.

Les moyens d'émission émettent en permanence (c'est-à-dire tant que l'enceinte connectée 1 est activée) via le haut-parleur 8 un signal sonore de détection émis. Le composant de traitement 12 acquiert via le microphone 10 un signal sonore de détection reçu qui résulte de la propagation par l'extérieur du boîtier 2 du signal sonore de détection émis. Le composant de traitement 12 détecte en temps réel, à partir du signal sonore de détection reçu, si un doigt d'un utilisateur est positionné ou non sur ou à proximité immédiate du trou 4.

Par « sur ou à proximité immédiate », on entend que le doigt est posé sur le trou 4 et le recouvre entièrement ou partiellement, ou bien que le doigt est approché au-dessus du trou 4 à une faible distance de celui-ci comprise par exemple entre 0 et 10mm.

Le composant de traitement 12 commande la mise en oeuvre d'une action prédéterminée si le doigt est positionné sur ou à proximité immédiate du trou 4.

En effet, lorsqu'un doigt (ou un objet quelconque) est positionné sur le trou 4 ou à proximité immédiate de celui-ci, le signal sonore de détection reçu est fortement atténué, c'est-à-dire que l'énergie ou la puissance instantanée du signal sonore de détection reçu a diminué fortement. La détection de cette atténuation par le composant de traitement 12 permet de détecter la présence du doigt de l'utilisateur et donc la volonté de celui-ci de commander la mise en oeuvre de l'action prédéterminée via le bouton virtuel.

L'utilisation de la mousse 11 et du silentbloc, et le fait que le diagramme de directivité du haut-parleur 8 soit orienté vers une zone ne contenant pas le microphone 10, permettent d'assurer que le microphone 10 ne capte pas le signal sonore de détection émis suite à une propagation de celui-ci via l'intérieur du boîtier 2, mais uniquement suite à une propagation de celui-ci par l'extérieur du boîtier 2. Le niveau et la variation de l'énergie du signal sonore de détection reçu dépendent uniquement de la position ou non d'un objet sur ou à proximité immédiate du trou 4.

Le signal sonore de détection émis est par exemple un signal sinusoïdal de fréquence et d'amplitude constantes.

Le signal sonore de détection émis est un signal normalement inaudible par un être humain. La fréquence du signal sonore de détection émis est à l'intérieur de la plage de fonctionnement du haut-parleur 8 et du microphone 10.

La fréquence du signal sonore de détection émis est par exemple égale à 22kHz. En effet, la gamme de fréquences de l'audition humaine s'étend typiquement entre 20Hz et 20kHz de sorte qu'une fréquence de 22kHz est inaudible. En outre, les appareils de traitement audio grand public (comme l'enceinte connectée 1) ont typiquement une fréquence d'échantillonnage de 48kHz et peuvent donc traiter les signaux de fréquence inférieure à 24kHz.

Avantageusement, le signal sonore de détection émis est modulé afin d'être facilement distingué du bruit de fond. Par exemple, le signal sonore de détection émis comprend une première succession de premiers signaux d'amplitude non nulle et de premiers signaux d'amplitude nulle. Les durées des intervalles comprenant les premiers signaux d'amplitude non nulle et des intervalles comprenant les premiers signaux d'amplitude nulle peuvent être variables.

Le signal sonore de détection émis est par exemple composé de la séquence suivante, répétée « indéfiniment » :

- sinusoïde à 22 kHz pendant 5ms (appartenant donc aux premiers signaux d'amplitude non nulle) ;
- silence pendant 5ms (appartenant donc aux premiers silences) ;
- sinusoïde à 22 kHz pendant 5ms (appartenant donc aux premiers signaux d'amplitude non nulle) ;
- silence pendant 10ms (appartenant donc aux premiers silences).

Le microphone 10 échantillonne le signal sonore de détection reçu. Le composant de traitement 12 acquiert en permanence, via le microphone 10, le signal sonore de détection reçu.

En référence à la figure 3, le composant de traitement 12 met alors en oeuvre un procédé de traitement sur le signal sonore de détection reçu afin de détecter si l'utilisateur a placé ou non son doigt sur ou à proximité immédiate du trou 4.

Tout d'abord, le composant de traitement 12 applique un filtre passe-bande autour d'une fréquence du signal sonore de détection émis (étape E1). Le filtre passe-bande est un filtre relativement étroit et sélectif.

Par exemple, dans le cas où le signal sonore de détection émis a une fréquence de 22kHz, le microphone 10 échantillonne le signal sonore de détection reçu à une fréquence de 48kHz pour produire un signal échantillonné. Le composant de traitement 12 applique le filtre suivant sur le signal échantillonné pour obtenir un signal filtré :

$$y(t) = 0{,}00995 \times \big(x(t) - x(t-2)\big) - 1{,}9125 \times y(t-1) - 0{,}9801 \times y(t-2)$$

où *x(t)* représente le signal échantillonné à l'instant *t* et *y(t)* représente le signal filtré à l'instant *t*.

Puis, le composant de traitement 12 calcule la puissance instantanée du signal sonore de détection reçu en calculant la moyenne de $y(t)^2$ sur un temps court (par exemple 1ms) - étape E2.

Le composant de traitement 12 évalue ainsi au temps *t* une puissance instantanée présente *P(t)* du signal sonore de détection reçu.

Le composant de traitement 12 compare alors la puissance instantanée présente *P(t)* avec une puissance instantanée passée *P(t-T0).* *T0* est compris entre 1ms et 500ms. Ici, *T0* est égal à 25ms.

Si le rapport entre la puissance instantanée présente et la puissance instantanée passée est inférieur à un seuil de puissance prédéterminé, le composant de traitement 12 en déduit que l'accès au trou 4 vient d'être au moins partiellement obturé, et donc que le doigt est positionné sur ou à proximité immédiate du trou 4 (étape E3).

Le seuil de puissance prédéterminé est ici égal à 25%, c'est-à-dire que si la puissance instantanée présente est inférieure à 25% de la puissance instantanée passée, alors le composant de traitement 12 considère que le doigt est positionné sur ou à proximité immédiate du trou 4.

Dans ce cas, le composant de traitement 12 commande la mise en oeuvre de l'action prédéterminée.

L'action prédéterminée peut consister à démarrer une interaction vocale avec l'utilisateur : dès que le composant de traitement 12 détecte que l'utilisateur a posé le doigt sur ou à proximité du trou 4, il déclenche un processus de reconnaissance vocale et de dialogue avec l'utilisateur. L'action prédéterminée peut aussi consister à désactiver l'interaction vocale.

L'action prédéterminée peut aussi consister à activer ou à désactiver un mode de veille. Dans ce cas, en fonctionnement normal, l'enceinte connectée 1 écoute en permanence afin de détecter un mot-clef pour démarrer une interaction avec l'utilisateur. Les fonctions de l'enceinte connectée 1 permettant de mettre en oeuvre le bouton virtuel sont elles aussi activés. Par contre, en fonctionnement dans le mode de veille, toutes les fonctions de l'enceinte connectée 1 sont désactivées sauf celles permettant de mettre en oeuvre le bouton virtuel. Ainsi, chaque fois que le composant de traitement 12 détecte que l'utilisateur a posé le doigt sur ou à proximité immédiate du trou 4, le composant de traitement 12 fait basculer alternativement l'enceinte connectée 1 entre le fonctionnement normal et le fonctionnement en veille.

Le composant de traitement 12 peut déterminer automatiquement la puissance à utiliser pour émettre le signal sonore de détection émis.

Pour cela, le composant de traitement 12 commande les moyens d'émission de sorte que ceux-ci émettent un signal sonore de test émis.

Le signal sonore de test émis est un signal intermittent qui comprend une deuxième succession de deuxièmes signaux d'amplitude non nulle et de deuxièmes signaux d'amplitude nulle.

Le composant de traitement 12 acquiert alors un signal sonore de test reçu. Le composant de traitement 12 évalue une différence d'énergie du signal sonore de test reçu sur les intervalles du signal sonore de test reçu correspondant aux deuxièmes signaux d'amplitude non nulle, et sur les intervalles du signal sonore de test reçu correspondant aux deuxièmes signaux d'amplitude nulle. Le composant de traitement 12 ajuste alors le volume du signal sonore de test émis pour obtenir un volume cible à partir duquel la différence d'énergie devient supérieure à un seuil d'énergie prédéterminé. Le seuil d'énergie prédéterminé est par exemple égal à 6dB.

Le composant de traitement 12 émet alors le signal sonore de détection émis avec le volume cible.

Avantageusement, cette calibration, réalisée via l'émission, la réception et l'analyse du signal sonore de test émis, est effectuée de manière permanente. Après avoir tenté de détecter le doigt sur ou à proximité immédiate du trou, et dans le cas où le doigt n'est pas détecté, on ajuste en conséquence le volume du signal sonore de détection émis en utilisant le volume cible.

Le principal intérêt de cette calibration est de s'adapter automatiquement en cas de signal perturbateur extérieur à la fréquence du signal de test (22 kHz). Il est donc préférable de le faire en permanence puisqu'un signal perturbateur peut apparaître ou disparaître à tout moment.

Il serait cependant aussi possible d'émettre le signal sonore de test émis uniquement à l'issue de la fabrication de l'enceinte connectée 1 au cours d'une phase de calibration, ou bien suite à la première activation de l'enceinte connectée 1 chez l'utilisateur.

Le réglage du volume permet aussi d'optimiser la puissance du signal sonore de détection émis en limitant ladite puissance tout en permettant une détection efficace du doigt sur ou à proximité immédiate du trou 4. La limitation de la puissance permet de limiter la consommation électrique de l'enceinte connectée 1, mais aussi d'éviter de perturber inutilement les animaux domestiques avec un signal possiblement audible pour eux et de volume trop important.

L'enceinte connectée 1 peut comprendre plusieurs trous 4 et plusieurs microphones 10 qui sont positionnés chacun à proximité d'un trou 4 distinct.

Une seule et même action prédéterminée peut être associée à tous les microphones 10. Le composant de traitement 12 acquiert les signaux sonores de détection reçus via les différents microphones 10, met en oeuvre le filtrage sur les signaux sonores de détection reçus, et compare la puissance instantanée (ou l'énergie) des signaux filtrés. Si le composant de traitement 12 détecte une baisse de puissance instantanée sur un seul microphone 10, et donc si le composant de traitement 12 détecte qu'un doigt a été positionné sur ou à proximité immédiate d'un seul trou 4, le composant de traitement 12 commande l'action prédéterminée.

Par contre, si le composant de traitement 12 détecte une baisse de puissance instantanée sur plusieurs microphones 10 simultanément, et donc si le composant de traitement 12 détecte qu'un ou des objets sont positionnés sur où à proximité immédiate de plusieurs trous 4 simultanément, alors il considère que la baisse de puissance instantanée a été provoquée par un événement extérieur accidentel et il ne commande pas la mise en oeuvre de l'action prédéterminée.

Alternativement, une action prédéterminée distincte peut être associée à chaque microphone 10. Dans ce cas, si le composant de traitement 12 détecte une baisse de puissance instantanée (ou d'énergie) sur un seul microphone particulier 10, et donc si le composant de traitement 12 détecte qu'un doigt est positionné sur ou à proximité immédiate d'un seul trou 4 particulier (à proximité duquel est situé ledit microphone 10 particulier), le composant de traitement 12 commande la mise en oeuvre de l'action prédéterminée associée audit microphone 10 particulier. On réalise de la sorte une pluralité de boutons virtuels (un par couple comprenant un trou 4 et le microphone 10 positionné à l'intérieur du boîtier à proximité dudit trou 4).

Bien entendu, l'invention n'est pas limitée au mode de réalisation décrit mais englobe toute variante entrant dans le champ de l'invention telle que définie par les revendications.

L'équipement électrique selon l'invention n'est bien sûr pas nécessairement une enceinte connectée, mais peut être tout équipement muni d'un microphone et d'un haut-parleur.

Les positions du microphone et du haut-parleur peuvent bien sûr être différentes de celles décrites ici.

On a décrit ici qu'il est avantageux que le diagramme de directivité du haut-parleur soit orienté vers une zone ne comprenant pas le microphone. Dans l'exemple utilisé, le microphone est positionné dans une partie supérieure de l'enceinte connectée et le diagramme de directivité du haut-parleur est orienté vers le bas. Une configuration différente est bien sûr envisageable. Par exemple, le microphone peut être positionné dans une partie supérieure de l'enceinte connectée et le diagramme de directivité du haut-parleur peut être orienté horizontalement.

## Revendications

1. Equipement électrique (1) comprenant :

   - un boîtier (2) sur lequel est formé un trou (4) ;
   - un microphone (10) positionné à l'intérieur du boîtier et à proximité du trou (4) ;
   - un haut-parleur (8) ;
   - des moyens d'émission agencés pour émettre via le haut-parleur un signal sonore de détection émis, le signal sonore de détection émis étant un signal comprenant une fréquence inaudible par un être humain ;
   - des moyens de traitement (12) agencés pour acquérir via le microphone (10) un signal sonore de détection reçu, le signal sonore de détection reçu résultant d'une propagation par l'extérieur du boîtier du signal sonore de détection émis, pour détecter en temps réel à partir du signal sonore de détection reçu si un doigt d'un utilisateur est positionné ou non sur ou à proximité immédiate du trou (4), et pour commander la mise en oeuvre d'une action prédéterminée si le doigt est positionné sur ou à proximité immédiate du trou.

2. Equipement électrique selon la revendication 1, dans lequel le microphone (10) est un composant monté en surface qui est monté sur un circuit imprimé d'une carte électrique (6) positionnée à l'intérieur du boîtier (2) parallèlement à une face (5) du boîtier sur laquelle est formée le trou (4).

3. Equipement électrique selon la revendication 2, dans lequel un matériau isolant phonique (11) est placé autour du microphone (10) entre le boîtier (2) et la carte électrique (6).

4. Equipement électrique selon l'une des revendications précédentes, dans lequel un diagramme de directivité du haut-parleur (8) est orienté vers une zone ne comprenant pas le microphone (10).

5. Equipement électrique selon la revendication 4, dans lequel le microphone (10) est positionné dans une partie supérieure de l'équipement électrique (1) et dans lequel le diagramme de directivité du haut-parleur (8) est orienté vers le bas.

6. Equipement électrique selon la revendication 4, dans lequel le microphone (10) est positionné dans une partie supérieure de l'équipement électrique (1) et dans lequel le diagramme de directivité du haut-parleur (8) est orienté horizontalement.

7. Equipement électrique selon l'une des revendications précédentes, dans lequel le signal sonore de détection émis comprend une première succession de premiers signaux d'amplitude non nulle et de premiers signaux d'amplitude nulle.

8. Equipement électrique selon l'une des revendications précédentes, dans lequel les moyens de traitement (12) sont agencés pour mettre en oeuvre un filtre passe-bande autour d'une fréquence du signal sonore de détection émis.

9. Equipement électrique selon l'une des revendications précédentes, dans lequel les moyens de traitement (12) sont agencés pour évaluer au temps $t$ une puissance instantanée présente $P(t)$ du signal sonore de détection reçu, pour comparer la puissance instantanée présente $P(t)$ avec une puissance instantanée passée $P(t-T0)$, $T0$ étant compris entre 1ms et 500ms, et, si un rapport entre la puissance instantanée présente et la puissance instantanée passée est inférieur à un seuil de puissance prédéterminé, en déduire que le doigt est positionné sur ou à proximité immédiate du trou (4) .

10. Equipement électrique selon l'une des revendications précédentes, dans lequel les moyens d'émission sont agencés pour émettre un signal sonore de test émis comprenant une deuxième succession de deuxièmes signaux d'amplitude non nulle et de deuxièmes signaux d'amplitude nulle, dans lequel les moyens de traitement (12) sont agencés pour acquérir un signal sonore de test reçu, et dans lequel les moyens de traitement (12) sont agencés pour évaluer une différence d'énergie du signal sonore de test reçu sur des intervalles du signal sonore de test reçu correspondant aux deuxièmes signaux d'amplitude non nulle et sur des intervalles du signal sonore de test reçu correspondant aux deuxièmes signaux d'amplitude nulle, pour définir un volume cible du signal sonore de test émis tel que la différence d'énergie soit supérieure à un seuil d'énergie prédéterminé, et pour émettre avec le volume cible le signal sonore de détection émis.

11. Equipement électrique selon l'une des revendications précédentes, dans lequel l'équipement électrique comprend une pluralité de microphones (10) positionnés chacun à proximité d'un trou (4) distinct formé dans le boîtier (2).

12. Equipement électrique selon la revendication 11, dans lequel les moyens de traitement (12) sont agencés pour ne pas commander la mise en oeuvre de l'action prédéterminée si les moyens de traitement (12) détectent qu'un ou des objets sont positionnés simultanément sur ou à proximité immédiate de plusieurs trous.

13. Equipement électrique selon la revendication 11, dans lequel une action prédéterminée distincte est associée à chaque microphone (10) et dans lequel, lorsque les moyens de traitement (12) détectent qu'un doigt est positionné sur ou à proximité immédiate d'un trou particulier, les moyens de traitement sont agencés pour réaliser l'action prédéterminée associée au microphone situé à proximité dudit trou particulier.

14. Equipement électrique selon l'une des revendications précédentes, dans lequel l'action prédéterminée est une activation ou une désactivation d'une interaction vocale avec un utilisateur.

15. Equipement électrique selon l'une des revendications 1 à 13, dans lequel l'action prédéterminée est une activation ou une désactivation d'un mode de veille.

16. Equipement électrique selon l'une des revendications précédentes, l'équipement électrique (1) étant une enceinte connectée qui met en oeuvre une fonction d'assistant vocal.

17. Procédé de commande d'un équipement électrique selon l'une des revendications précédentes, comprenant les étapes de :

   - émettre via le haut-parleur (8) un signal sonore de détection émis, le signal sonore de détection émis étant un signal comprenant une fréquence inaudible par un être humain ;
   - recevoir via le microphone (10) un signal sonore de détection reçu, le signal sonore de détection reçu résultant d'une propagation par l'extérieur du boîtier du signal sonore de détection émis ;
   - détecter en temps réel à partir du signal sonore de détection reçu si un doigt d'un utilisateur est positionné ou non sur ou à proximité immédiate du trou, et réaliser une action prédéterminée si le doigt est positionné sur ou à proximité immédiate du trou.

18. Programme d'ordinateur comprenant des instructions qui conduisent l'équipement électrique selon l'une des revendications 1 à 16 à exécuter les étapes du procédé de commande selon la revendication 17.

19. Support d'enregistrement lisible par ordinateur, sur lequel est enregistré le programme d'ordinateur selon la revendication 18.

**Patentansprüche**

1. Elektrisches Gerät (1), umfassend:

    - ein Gehäuse (2), auf dem ein Loch (4) ausgebildet ist;
    - ein Mikrofon (10), das im Inneren des Gehäuses und in der Nähe des Lochs (4) positioniert ist;
    - einen Lautsprecher (8);
    - Sendemittel, die ausgebildet sind, über den Lautsprecher ein gesendetes Detektionstonsignal zu senden, wobei das gesendete Detektionstonsignal ein Signal ist, das eine für einen Menschen unhörbare Frequenz umfasst;
    - Verarbeitungsmittel (12), die ausgebildet sind, über das Mikrofon (10) ein empfangenes Detektionstonsignal zu erfassen, wobei das empfangene Detektionstonsignal aus einer Ausbreitung des gesendeten Detektionstonsignals über die Außenseite des Gehäuses resultiert, in Echtzeit anhand des empfangenen Detektionstonsignals zu detektieren, ob ein Finger eines Benutzers auf oder in unmittelbarer Nähe des Lochs (4) positioniert ist oder nicht, und das Durchführen einer vorbestimmten Handlung zu steuern, wenn der Finger auf oder in unmittelbarer Nähe des Lochs positioniert ist.

2. Elektrisches Gerät nach Anspruch 1, bei dem das Mikrofon (10) ein oberflächenmontiertes Bauteil ist, das auf einer gedruckten Schaltung einer Leiterplatte (6) montiert ist, die im Inneren des Gehäuses (2) parallel zu einer Fläche (5) des Gehäuses positioniert ist, auf der das Loch (4) ausgebildet ist.

3. Elektrisches Gerät nach Anspruch 2, bei dem ein schalldämmendes Material (11) um das Mikrofon (10) zwischen dem Gehäuse (2) und der Leiterplatte (6) platziert ist.

4. Elektrisches Gerät nach einem der vorhergehenden Ansprüche, bei dem ein Richtdiagramm des Lautsprechers (8) zu einer Zone gerichtet ist, die das Mikrofon (10) nicht enthält.

5. Elektrisches Gerät nach Anspruch 4, bei dem das Mikrofon (10) in einem oberen Teil des elektrischen Geräts (1) positioniert ist und bei dem das Richtdiagramm des Lautsprechers (8) nach unten gerichtet ist.

6. Elektrisches Gerät nach Anspruch 4, bei dem das Mikrofon (10) in einem oberen Teil des elektrischen Geräts (1) positioniert ist und bei dem das Richtdiagramm des Lautsprechers (8) horizontal gerichtet ist.

7. Elektrisches Gerät nach einem der vorhergehenden Ansprüche, bei dem das gesendete Detektionstonsignal eine erste Folge von ersten Signalen mit Nicht-Null-Amplitude und von ersten Signalen mit Null-Amplitude umfasst.

8. Elektrisches Gerät nach einem der vorhergehenden Ansprüche, bei dem die Verarbeitungsmittel (12) ausgebildet sind, ein Bandpassfilter um eine Frequenz des gesendeten Detektionstonsignals zu implementieren.

9. Elektrisches Gerät nach einem der vorhergehenden Ansprüche, bei dem die Verarbeitungsmittel (12) ausgebildet sind, zum Zeitpunkt $t$ eine aktuelle Momentanleistung $P(t)$ des empfangenen Detektionstonsignals zu evaluieren, die aktuelle Momentanleistung $P(t)$ mit einer vergangenen Momentanleistung $P(t-T0)$ zu vergleichen, wobei $T0$ zwischen 1 ms und 500 ms liegt, und wenn ein Verhältnis zwischen der aktuellen Momentanleistung und der vergangenen Momentanleistung niedriger als ein vorbestimmter Leistungsschwellenwert ist, daraus abzuleiten, dass der Finger auf oder in unmittelbarer Nähe des Lochs (4) positioniert ist.

10. Elektrisches Gerät nach einem der vorhergehenden Ansprüche, bei dem die Sendemittel ausgebildet sind, ein gesendetes Testtonsignal zu senden, das eine zweite Folge von zweiten Signalen mit Nicht-Null-Amplitude und von zweiten Signalen mit Null-Amplitude umfasst, bei dem die Verarbeitungsmittel (12) ausgebildet sind, ein empfangenes Testtonsignal zu erfassen, und bei dem die Verarbeitungsmittel (12) ausgebildet sind, eine Energiedifferenz des empfangenen Testtonsignals über Intervalle des empfangenen Testtonsignals, die den zweiten Signalen mit Nicht-Null-Amplitude entsprechen, und über Intervalle des empfangenen Testtonsignals, die den zweiten Signalen mit Null-Amplitude entsprechen, zu evaluieren, ein Zielvolumen des gesendeten Testtonsignals derart zu definieren, dass die Energiedifferenz größer als ein vorbestimmter Energieschwellenwert ist, und mit dem Zielvolumen das gesendete Detektionstonsignal zu senden.

11. Elektrisches Gerät nach einem der vorhergehenden Ansprüche, bei dem das elektrische Gerät eine Vielzahl von Mikrofonen (10) umfasst, die jeweils in der Nähe eines separaten, in dem Gehäuse (2) ausgebildeten Lochs (4) positioniert sind.

12. Elektrisches Gerät nach Anspruch 11, bei dem die Verarbeitungsmittel (12) ausgebildet sind, das Durchführen der vorbestimmten Handlung nicht zu steuern, wenn die Verarbeitungsmittel (12) erfassen, dass ein oder mehrere Objekte gleichzeitig auf oder in unmittelbarer Nähe mehrerer Löcher positioniert sind.

13. Elektrisches Gerät nach Anspruch 11, bei dem eine separate vorbestimmte Handlung jedem Mikrofon (10) zugeordnet ist und bei dem, wenn die Verarbeitungsmittel (12) erfassen, dass ein Finger auf oder in unmittelbarer Nähe eines besonderen Lochs positioniert ist, die Verarbeitungsmittel ausgebildet sind, die vorbestimmte Handlung durchzuführen, die dem Mikrofon zugeordnet ist, das sich in der Nähe des genannten besonderen Lochs befindet.

14. Elektrisches Gerät nach einem der vorhergehenden Ansprüche, bei dem die vorbestimmte Handlung eine Aktivierung oder Deaktivierung einer Sprachinteraktion mit einem Benutzer ist.

15. Elektrisches Gerät nach einem der Ansprüche 1 bis 13, bei dem die vorbestimmte Handlung eine Aktivierung oder Deaktivierung eines Standby-Modus ist.

16. Elektrisches Gerät nach einem der vorhergehenden Ansprüche, wobei das elektrische Gerät (1) ein angeschlossener Lautsprecher ist, der eine Sprachassistentenfunktion umsetzt.

17. Verfahren zum Steuern eines elektrischen Geräts nach einem der vorhergehenden Ansprüche, umfassend die Schritte:

    - Senden über den Lautsprecher (8) eines gesendeten Detektionstonsignals, wobei das gesendete Detektionstonsignal ein Signal ist, das eine für einen Menschen unhörbare Frequenz umfasst;
    - Empfangen über das Mikrofon (10) eines empfangenen Detektionstonsignals, wobei das empfangene Detektionstonsignal aus einer Ausbreitung des gesendeten Detektionstonsignals über die Außenseite des Gehäuses resultiert;
    - Erfassen in Echtzeit anhand des empfangenen Detektionstonsignals, ob ein Finger eines Benutzers auf oder in unmittelbarer Nähe des Lochs positioniert ist oder nicht, und Durchführen einer vorbestimmten Handlung, wenn der Finger auf oder in unmittelbarer Nähe des Lochs positioniert ist.

18. Computerprogramm, umfassend Anweisungen, die das elektrische Gerät nach einem der Ansprüche 1 bis 16 veranlassen, die Schritte des Verfahrens zum Steuern nach Anspruch 17 auszuführen.

19. Computerlesbarer Aufzeichnungsträger, auf dem das Computerprogramm nach Anspruch 18 gespeichert ist.

**Claims**

1. Electrical equipment (1) comprising:

    · a housing (2) having a hole (4) formed therein;
    · a microphone (10) positioned inside the housing and in the proximity of the hole (4);
    · a loudspeaker (8);
    · emitter means arranged to emit an emitted detection sound signal via the loudspeaker, the emitted detection sound signal being a signal comprising a frequency inaudible for a human being;
    · processor means (12) arranged to acquire a received detection sound signal via the microphone (10), the received detection sound signal resulting from the emitted detection sound signal propagating via the outside of the housing, to detect in real time from the received detection sound signal whether a user's finger is or is not positioned on or in the immediate proximity of the hole (4), and if a finger is positioned on or in the immediate proximity of the hole to cause a predetermined action to be performed.

2. Electrical equipment according to claim 1, wherein the microphone (10) is a surface mount component that is mounted on a printed circuit of an electric circuit card (6) positioned inside the housing (2) parallel to a face (5) of the housing in which the hole (4) is formed.

3. Electrical equipment according to claim 2, wherein sound insulating material (11) is placed around the microphone (10) between the housing (2) and the circuit card (6).

4.  Electrical equipment according to any preceding claim, wherein the loudspeaker (8) has a directivity pattern that is oriented towards a zone that does not include the microphone (10).

5.  Electrical equipment according to claim 4, wherein the microphone (10) is positioned in an upper portion of the electrical equipment (1) and wherein the directivity pattern of the loudspeaker (8) is downwardly oriented.

6.  Electrical equipment according to claim 4, wherein the microphone (10) is positioned in an upper portion of the electrical equipment (1) and wherein the directivity pattern of the loudspeaker (8) is horizontally oriented.

7.  Electrical equipment according to any preceding claim, wherein the emitted detection sound signal comprises a first run of first signals of non-zero amplitude and of first signals of zero amplitude.

8.  Electrical equipment according to any preceding claim, wherein the processor means (12) are arranged to implement a bandpass filter around a frequency of the emitted detection sound signal.

9.  Electrical equipment according to any preceding claim, wherein the processor means (12) are arranged at a time $t$ to evaluate a present instantaneous power $P(t)$ of the received detection sound signal, to compare the present instantaneous power $P(t)$ with a past instantaneous power $P(t-T0)$, where $T0$ lies in the range 1 ms to 500 ms, and if the ratio between the present instantaneous power and the past instantaneous power is below a predetermined power threshold, to deduce that a finger is positioned on or in the immediate proximity of the hole (4).

10. Electrical equipment according to any preceding claim, wherein the emitter means are arranged to emit an emitted test sound signal comprising a second run of second signals of non-zero amplitude and of second signals of zero amplitude, wherein the processor means (12) are arranged to acquire a received test sound signal, and wherein the processor means (12) are arranged to evaluate an energy difference for the received test sound signal over its intervals corresponding to the second signals of non-zero amplitude and over its intervals corresponding to the second signals of zero amplitude, in order to define a target volume for the emitted test sound signal such that the energy difference is greater than a predetermined energy threshold, and to emit the emitted detection sound signal with the target volume.

11. Electrical equipment according to any preceding claim, wherein the electrical equipment includes a plurality of microphones (10), each positioned in the proximity of a respective hole (4) formed in the housing (2).

12. Electrical equipment according to claim 11, wherein the processor means (12) are arranged not to cause the predetermined action to be performed if the processor means (12) detect that one or more objects are positioned on or in the immediate proximity of a plurality of holes simultaneously.

13. Electrical equipment according to claim 11, wherein a distinct predetermined action is associated with each microphone (10) and wherein, when the processor means (12) detect that a finger is positioned on or in the immediate proximity of a particular hole, the processor means are arranged to cause the predetermined action associated with the microphone situated in the proximity of said particular hole to be performed.

14. Electrical equipment according to any preceding claim, wherein the predetermined action is activating or deactivating voice interaction with a user.

15. Electrical equipment according to any one of claims 1 to 13, wherein the predetermined action is activating or deactivating a standby mode.

16. Electrical equipment according to any preceding claim, the electrical equipment (1) being a smartspeaker that performs a voice assistant function.

17. A method of controlling electrical equipment according to any preceding claim, the method comprising the steps of:

    · using the loudspeaker (8) to emit an emitted detection sound signal, the emitted detection sound signal being a signal comprising a frequency inaudible for a human being;
    · using the microphone (10) to receive a received detection sound signal, the received detection sound signal resulting from the emitted detection sound signal propagating via the outside of the housing ;

· using the received detection sound signal to detect in real time whether a user's finger is or is not positioned on or in the immediate proximity of the hole, and performing a predetermined action if a finger is positioned on or in the immediate proximity of the hole.

18. A computer program including instructions for causing the electrical equipment according to any one of claims 1 to 16 to execute the steps of the control method according to claim 17.

19. A computer readable storage medium having stored thereon the computer program according to claim 18.

Fig. 1

Fig. 2

Fig. 3

## RÉFÉRENCES CITÉES DANS LA DESCRIPTION

### Documents brevets cités dans la description

- US 2009046868 A1
- US 2012106754 A1